(19) Europäisches Patentamt
European Patent Office
Office européen des brevets

(11)   **EP 2 770 256 B1**

(12)   **EUROPEAN PATENT SPECIFICATION**

(45) Date of publication and mention
of the grant of the patent:
**28.02.2018   Bulletin 2018/09**

(51) Int Cl.:
*F23N 5/18* (2006.01)          *G01F 1/00* (2006.01)
*G01F 15/00* (2006.01)        *G01F 15/06* (2006.01)
*G01F 15/075* (2006.01)      *H01M 8/04014* (2016.01)

(21) Application number: **12841423.2**

(22) Date of filing: **17.10.2012**

(86) International application number:
**PCT/JP2012/006633**

(87) International publication number:
**WO 2013/057939 (25.04.2013 Gazette 2013/17)**

(54) **FUEL-USE INSTRUMENT DISCRIMINATION DEVICE, FLOW-MEASUREMENT DEVICE, GAS METER, AND METHOD FOR DISCRIMINATING BETWEEN FUEL-USE INSTRUMENTS**

VORRICHTUNG ZUR BESTIMMUNG EINES BRENNSTOFFVERBRAUCHS, FLUSSMESSVORRICHTUNG, GASZÄHLER UND VERFAHREN ZUR UNTERSCHEIDUNG ZWISCHEN BRENNSTOFF VERBRAUCHENDEN INSTRUMENTEN

DISPOSITIF DE DISTINCTION D'INSTRUMENT DE CONSOMMATION DE CARBURANT, DISPOSITIF DE MESURE D'ÉCOULEMENT, GAZOMÈTRE, ET PROCÉDÉ PERMETTANT DE FAIRE LA DISTINCTION ENTRE DES INSTRUMENTS DE CONSOMMATION DE CARBURANT

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority:   **18.10.2011   JP 2011228913**

(43) Date of publication of application:
**27.08.2014   Bulletin 2014/35**

(73) Proprietor: **Panasonic Corporation**
**Kadoma-shi, Osaka 571-8501 (JP)**

(72) Inventors:
• **YOKOHATA, Mitsuo**
**Chuo-ku, Osaka 540-6207 (JP)**

• **NAWA, Motoyuki**
**Chuo-ku, Osaka 540-6207 (JP)**

(74) Representative: **Schwabe - Sandmair - Marx**
**Patentanwälte Rechtsanwalt**
**Partnerschaft mbB**
**Joseph-Wild-Straße 20**
**81829 München (DE)**

(56) References cited:
EP-A1- 1 881 304          EP-A1- 2 093 545
JP-A- 2007 225 129      JP-A- 2009 047 678
JP-A- 2009 168 703      JP-A- 2011 099 682

## Description

## Technical Field

The present invention relates to a fuel instrument determination device and a fuel instrument determination method. More specifically, the present invention relates to a fuel instrument determination device and a fuel instrument determination method, which determine a fuel instrument by utilizing a slope of a change in a fuel flow rate.

## Background Art

JP 2006-313114 discloses a gas meter device. The gas meter device includes a flow rate measurement means which is connected to a home gas supply pipe and measures a gas flow rate at constant time intervals, a calculator means which calculates a difference value between flow rate values output from the flow rate measurement means, and a comparator/determiner means which compares the difference value calculated by the calculator means to change point determination values stored in a storage means to determine a change in a use state of a particular gas instrument. The comparator/determiner means compares the difference value between the flow rate values to the change point determination values stored in the storage means such that the determination values correspond to gas instruments, respectively, thereby determining which of the gas instruments the change in the use state has occurred in (claim 3).

EP 1 881 304 A1 discloses a flow rate measurement device connected to a household gas supply pipe including a flow rate measuring instrument for measuring flow rate in predetermined time intervals; a computing unit for obtaining a differential value of flow rate values ouput from a flow rate measuring instrument; an appliance information storage; and an appliance determining unit for comparing the differntial value calculated by the computing unit with a start determination value registered in appliance information storage and determining use of an appliance connected downstream of flow rate measuring instrument.

EP 2 093 545 A1 discloses a flow rate measuring device having a flow rate measurement unit, an appliance registering unit, a calculating unit, a determining unit, a first appliance identifying unit, and a second appliance identifying unit. The appliance registering unit stores at least first gas flow rate variation profiles on activation of respective gas appliances coupled to a flow channel, and second gas flow rate variation profiles based on the control specific to the respective gas appliances. The first appliance identifying unit identifies which gas appliance is activated based on the first gas flow rate variation profiles on activation. When a determining unit detects a stop of any of gas appliances, the second appliance identifying unit identifies a gas appliance in continous use by using the second gas flow rate variation profiles based on the control specific to the respective gas appliances.

## Summary of Invention

## Technical Problem

An object of the present invention is to improve an accuracy of determination as to a fuel instrument, in a fuel instrument determination device and a fuel instrument determination method, which determine the fuel instrument by utilizing a slope of a change in a fuel flow rate.

## Solution to Problem

The inventors intensively studied to improve an accuracy of determination as to a fuel instrument, in a fuel instrument determination device and a fuel instrument determination method, which determine the fuel instrument by utilizing a slope of a change in a fuel flow rate, and discovered the following.

In a fuel instrument such as a stove burner, a fuel consumption amount changes relatively steeply with time, at the time of start of its operation, during the operation, and at the end of the operation. In contrast, in a fuel instrument such as a fuel cell system, a fuel consumption amount changes very gradually with time, at the time of start of its operation, during the operation, and at the end of the operation. In some cases, a conventional fuel instrument determination device cannot accurately determine start of the use of the fuel instrument in which the fuel consumption amount changes very gradually with time.

For example, if an attempt is made to determine the fuel instrument based on the slope of the change in the fuel flow rate for a short time (e.g., several seconds), the change in the fuel flow rate cannot be detected for the fuel instrument in which the fuel consumption amount changes very gradually with time, because its changing magnitude is small. Also, if an attempt is made to determine the fuel instrument based on the slope of the change in the fuel flow rate for a long time (e.g., several tens minutes), it is difficult to determine another fuel instrument which causes a great change in the fuel flow rate within a short time and the fuel instrument in which the fuel consumption amount changes very gradually with time such that these fuel instruments are distinguished from each other.

In view of the above described finding, the inventors conceived that an accuracy of determination as to the fuel instrument can be improved, by utilizing slopes of changes in fuel flow rates in two kinds of measurement periods which are different in length from each other, i.e., a first measurement period and a second measurement period.

A fuel instrument determination device of the present invention is specified by independent claim 1 with further possible configurations being specified by dependent claims 2-7.

A flow meter device of the present invention is specified by dependent claim 8 and comprises the fuel instrument determination device of the present invention as specified by claims 1-7.

A gas meter of the present invention is specified by dependent claim 9 and comprises the fuel instrument determination device of the present invention as specified by claims 1-7.

A fuel instrument determination method of the present invention is specified by independent claim 10 with further possible configurations being specified by dependent claims 11 and 12.

**Advantageous Effects of Invention**

A fuel instrument determination device and a fuel instrument determination method of the present invention have advantages that it is possible to improve an accuracy of determination as to a fuel instrument, in a fuel instrument determination device and a fuel instrument determination method, which determine the fuel instrument by utilizing a slope of a change in a fuel flow rate.

**Brief Description of Drawings**

[Fig. 1] Fig. 1 is a conceptual view showing an exemplary schematic configuration of a fuel instrument determination device according to Embodiment 1.

[Fig. 2] Fig. 2 is a block diagram showing an exemplary hardware configuration of the fuel instrument determination device according to Embodiment 1.

[Fig. 3] Fig. 3 is a flowchart showing an exemplary fuel instrument determination method according to Embodiment 1.

[Fig. 4] Fig. 4 is a view for explaining a concept of the fuel instrument determination method according to Embodiment 1.

[Fig. 5] Fig. 5 is a conceptual view showing an exemplary schematic configuration of a fuel instrument determination device according to Embodiment 2.

[Fig. 6] Fig. 6 is a flowchart showing an exemplary fuel instrument determination method according to Embodiment 2.

[Fig. 7] Fig. 7 is a flowchart showing an exemplary fuel instrument determination method according to a modified example of Embodiment 2.

[Fig. 8] Fig. 8 is a conceptual view showing an exemplary schematic configuration of a fuel instrument determination device according to Embodiment 3.

**Description of Embodiments**

**(Embodiment 1)**

**[Device configuration]**

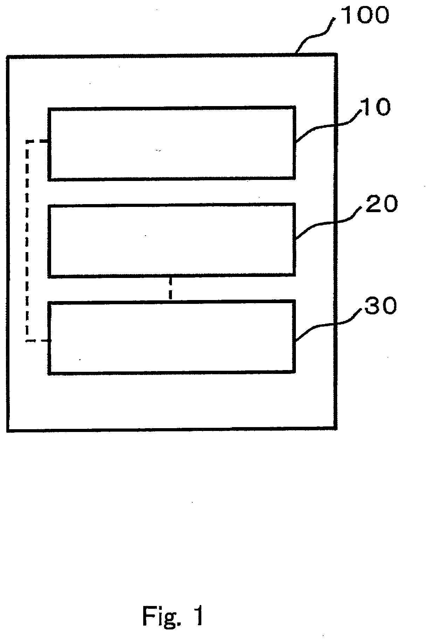

Fig. 1 is a conceptual view showing an exemplary schematic configuration of a fuel instrument determination device according to Embodiment 1.

As shown in Fig. 1, a fuel instrument determination device 100 according to Embodiment 1 includes a first obtaining section 10, a second obtaining section 20, and a determiner section 30. Although in the example of Fig. 1, the first obtaining section 10 and the second obtaining section 20 are communicatively coupled to the determiner section 30, a connection relationship is not limited to this.

The first obtaining section 10 obtains a slope of a change in a fuel flow rate in a first measurement period.

The second obtaining section 20 obtains a slope of a change in a fuel flow rate in a second measurement period which is different in length from first the measurement period.

The term "fuel flow rate" refers to an amount of a fuel such as a gas or liquid which flows per unit time. A unit of the flow rate is arbitrary, and may be, for example, seem, liter/min, a gram/sec, etc.. The flow rate may be a flow rate of, for example, a fuel gas, kerosene, etc.. The flow rate is preferably a flow rate of the fuel gas such as a natural gas, or LPG.

The term "slope of a change in a fuel flow rate" may be value expressed as $(q2 - q1)/ (t2 - t1)$ when the flow rate at time t1 is q1, the flow rate at time t2 is t2, and a measurement period is a period from the time t1 to the time t2. A unit of the time and a unit of the flow rate are arbitrary. The term "slope of a change in a fuel flow rate" includes a parameter substantially representing the slope in addition to the above. The term "slope of a change in a fuel flow rate" may be, for example, a change in a flow rate per unit time. For example, in a case where a plurality of first measurement periods are equal in length to each other, a difference in flow rate may be used as "slope of a change in a fuel flow rate".

The first measurement period may be, for example, about several seconds. The second measurement period may be, for example, about several tens seconds. The second measurement period is preferably longer than the first measurement period. The second measurement period preferably includes the plurality of first measurement periods. More preferably, the second measurement period is composed of the plurality of first measurement periods which are successive.

A method of obtaining the slope of the change in the fuel flow rate in the first measurement period by the first obtaining section 10 is not particularly limited. Specifically, for example, the first obtaining section 10 may receive the slope of the change in the fuel flow rate from an outside device via communication, and the like.

Or, the fuel instrument determination device 100 may include a flow meter and a timer and the first obtaining section 10 may calculate the slope of the change in the fuel flow rate based on a correspondence between the flow rate received from the flow meter and time received from the timer.

A method of obtaining the slope of the change in the fuel flow rate in the second measurement period by the second obtaining section 20 is not particularly limited. Specifically, for example, the second obtaining section 20 may receive the slope of the change in the fuel flow rate from the outside device via communication, and the like. Or, the fuel instrument determination device 100 may include the flow meter and the timer and the second obtaining section 20 may calculate the slope of the change in the fuel flow rate based on a correspondence between the flow rate received from the flow meter and time received from the timer. Or, the second obtaining section 20 may calculate the slope of the change in the fuel flow rate in the second measurement period using the slope of the change in the fuel flow rate in the first measurement period which is obtained by the first obtaining section 10.

The determiner section 30 determines a fuel instrument using the slope of the change in the fuel flow rate in the first measurement period and the slope of the change in the fuel flow rate in the second measurement period.

The term "fuel instrument" refers to a fuel instrument which is a determination target for which the fuel instrument determination device performs determination, and for example, a fuel gas instrument, etc., which is connected to a pipe which is supplied with a fuel gas from a fuel gas utility company in a building equipped with the fuel instrument determination device.

The phrase "determines a fuel instrument" is meant to include identifying a type of a fuel instrument, the use of which has been started, identifying a type of a fuel instrument, the use of which has been finished, identifying a type of a fuel instrument in use, identifying a type of a fuel instrument which is not in use, etc..

A specific determination method of the fuel instrument is not particularly limited. For example, in a case where a degree (variance) of non-uniformity of the slopes of the changes in the fuel flow rates in the plurality of first measurement periods is less than a first threshold and the slope of the change in the fuel flow rate in the second measurement period falls within a second range, it may be determined that a particular fuel instrument is in use (or is not in use). Or, in a case where all of the slopes of the changes in the fuel flow rates in the plurality of first measurement periods fall within the first range and all of the slopes of the changes in the fuel flow rates in the plurality of second measurement periods fall within the second range, it may be determined that a particular fuel instrument is in use (or is not in use). Whether or not the first range includes an upper limit threshold and whether or not the first range includes a lower limit threshold may be set as desired. Whether or not the second range includes an upper limit threshold and whether or not the second range includes a lower limit threshold may be set as desired. Any determination method may be used so long as the slope of the change in the fuel flow rate in the first measurement period and the slope of the change in the fuel flow rate in the second measurement period are used.

The number of the first measurement periods used in the determination may be set as desired. The number of the second measurement periods used in the determination may be set as desired.

The determiner section 30 preferably determines the fuel instrument using each of the slopes of the changes in the fuel flow rates in the plurality of first measurement periods and the slope of the change in the fuel flow rate in the second measurement period.

The determiner section 30 more preferably determines the fuel instrument based on whether or not the slope of the change in the fuel flow rate in the first measurement period falls within the first range. The determiner section 30 more preferably determines the fuel instrument based on whether or not the slope of the change in the fuel flow rate in the second measurement period falls within the second range. The determiner section 30 more preferably determines the fuel instrument based on whether or not the slope of the change in the fuel flow rate in the first measurement period falls within the first range, and whether the slope of the change in the fuel flow rate in the second measurement period falls within the second range. The first range more preferably includes the second range.

The determiner section 30 more preferably determines the fuel instrument based on whether or not the slopes of the changes in the fuel flow rates in all of the first measurement periods included in the second measurement period fall within the first range.

The first measurement periods are preferably equal in length to each other.

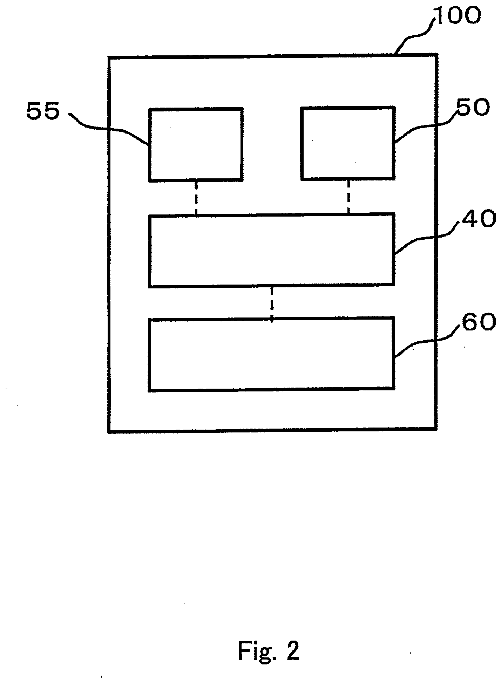

Fig. 2 is a block diagram showing an exemplary hardware configuration of the fuel instrument determination device according to Embodiment 1.

As exemplarily shown in Fig. 2, the fuel instrument determination device 100 includes, for example, a controller 40, a storage unit 50, a timer 55, and an input/output unit 60. Although in the example of Fig. 2, the timer 55, the storage unit 50, and the input/output unit 60 are communicatively coupled to the controller 40, a connection relationship is not limited to this.

The controller 40 is not particularly limited so long as it has a control function, and may be, for example, MPU, CPU, etc.. The controller 40 may be constituted by a single controller which performs centralized control or may be a plurality of controllers which cooperate with each other to perform distributed control.

The storage unit 50 contains, for example, a program used for calculating the slope of the change in the fuel flow rate, a determination program, etc., which are executed by the controller 40. The storage unit 50 may be, for example, a memory.

The timer 55 is not particularly limited so long as it has a time measuring function, and may be, for example, a clock circuit, etc..

The input/output unit 60 is a unit via which the controller 40 and another section or outside device perform communication with each other. The input/output unit 60 may be connected to a flow meter included in the fuel instrument determination device 100. The input/output unit 60 may be connected to a flow meter device outside of the fuel instrument determination device 100 via a network.

For example, the first obtaining section 10 may be implemented by the controller 40, the storage unit 50, the timer 55, and the input/output unit 60. Also, for example, the second obtaining section 20 may be implemented by the controller 40, the storage unit 50, the timer 55, and the input/output unit 60. Also, for example, the determiner section 30 may be implemented by the controller 40, the storage unit 50, and the input/output unit 60.

**[Fuel instrument determination method]**

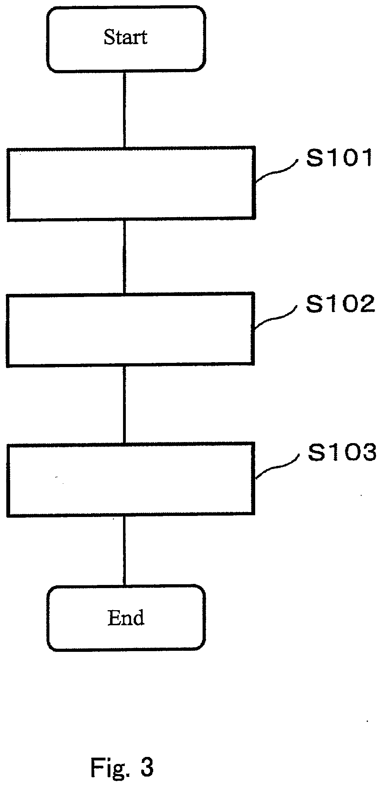

Fig. 3 is a flowchart showing an exemplary fuel instrument determination method according to Embodiment 1. Hereinafter, with reference to Fig. 3, the operation method of the fuel instrument determination device 100 according to Embodiment 1 and the fuel instrument determination method according to Embodiment 1 will be described. It is supposed that in the operation of the fuel instrument determination device 100, for example, each operation may be executed under control of the controller 40 based on the operation program stored in the storage unit 50.

When the fuel instrument determination operation starts (Start), initially, the slope of the change in the fuel flow rate in the first measurement period is obtained (step S101).

In the fuel instrument determination device 100, the first obtaining section 10 performs step S101. The first obtaining section 10 sends the slope of the change in the fuel flow rate in the first measurement period to the determiner section 30.

The operation performed by the first obtaining section 10 to obtain the slope of the change in the fuel flow rate in the first measurement period is implemented as follows, for example, in the hardware exemplarily shown in Fig. 2. Firstly, the controller 40 obtains a fuel flow rate value (first flow rate value) via the input/output unit 60, and stores in the storage unit 50, the first flow rate value, along with clock information (first clock) obtained from the timer 55. Then, when the clock information obtained from the timer 55 indicates that the first measurement period has passed, the controller 40 obtains a fuel flow rate value (second flow rate value) again via the input/output unit 60, and stores in the storage unit 50, the second flow rate value, along with clock information (second clock) obtained from the timer 55. After that, the controller 40 calculates the slope of the change in the fuel flow rate in the first measurement period by dividing a difference between the first flow rate value and the second flow rate value by a difference (first measurement period) between the first clock and the second clock. The slope is stored in the storage unit 50 in correspondence with, for example, the first clock.

Then, the slope of the change in the fuel flow rate in the second measurement period which is different in length from the first measurement period is obtained (step S102).

In the fuel instrument determination device 100, the second obtaining section 20 performs step S102. The second obtaining section 20 sends the slope of the change in the fuel flow rate in the second measurement period to the determiner section 30.

The operation performed by the second obtaining section 20 to obtain the slope of the change in the fuel flow rate in the first measurement period is implemented as follows, for example, in the hardware exemplarily shown in Fig. 2. Firstly, the controller 40 obtains a flow rate value (third flow rate value) via the input/output unit 60, and stores in the storage unit 50, the third flow rate value, along with clock information (third clock) obtained from the timer 55. Then, when the clock information obtained from the timer 55 indicates that the second measurement period has passed, the controller 40 obtains a flow rate value (fourth flow rate value) again via the input/output unit 60, and stores in the storage unit 50, the fourth flow rate value, along with clock information (fourth clock) obtained from the timer 55. After that, the controller 40 calculates the slope of the change in the fuel flow rate in the second measurement period by dividing a difference between the third flow rate value and the fourth flow rate value by a difference (second measurement period) between the third clock and the fourth clock. The slope is stored in the storage unit 50 in correspondence with, for example, the third clock.

Then, the fuel instrument is determined using the slope of the change in the fuel flow rate in the first measurement period which is obtained in step S101 and the slope of the change in the fuel flow rate in the second measurement period which is obtained in step S102 (step S103), and the fuel instrument determination operation is terminated (End).

In the fuel instrument determination device 100, the determiner section 30 performs step S103.

The operation performed by the determiner section 30 to determine the fuel instrument is implemented as follows, for example, in the hardware exemplarily shown in Fig. 2. Specifically, the controller 40 determines the fuel instrument, using the slope of the change in the fuel flow rate in the first measurement period which is stored in the storage unit 50, the slope of the change in the fuel flow rate in the second measurement period which is stored in the storage unit 50, and the determination program stored in the storage unit 50.

How a result of the determination is processed is not limited. For example, the result of the determination may be output from an output means such as a display and a printer, or may be sent to a data center, etc., via a network.

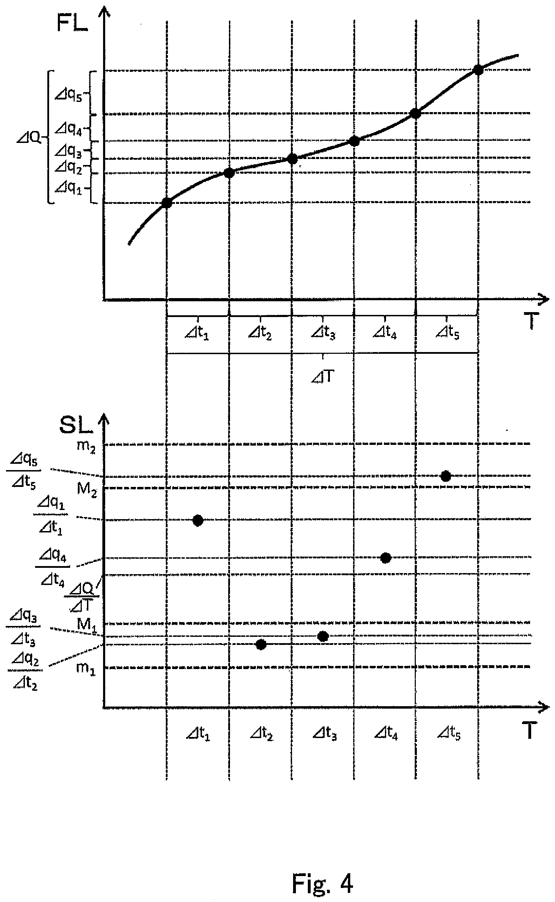

Fig. 4 is a view for explaining a concept of the fuel instrument determination method according to Embodiment 1. An upper half part of Fig. 4 is a graph showing an example of the change in the fuel flow rate which occurs with time. In this graph, a horizontal axis indicates time T and a vertical axis indicates the flow rate FL. A lower half part of Fig. 4 is a graph showing an example of the slope of the change in the fuel flow rate. In this graph, a horizontal axis indicates time T and a vertical axis indicates the slope SL of the change in the fuel flow rate. Hereinafter, a specific fuel instrument determination method according to the present embodiment will be described with reference to Fig. 4. Hereinafter, an example of the fuel instrument determination will be described assuming that a fuel cell system is a determination target.

$\Delta t_i (i = 1$ to 5) indicates i-th first measurement period. In the example of Fig. 4, $\Delta t1$ to $\Delta t5$ are equal in length to each other. However, $\Delta t1$ to $\Delta t5$ may be different in length from each other. $\Delta q_i (i = 1$ to 5) indicates the change in the fuel flow rate in the i-th first measurement period. The slope of the change in the fuel flow rate in the i-th first measurement period is expressed as $\Delta q_i/\Delta t_i (i = 1$ to 5).

$\Delta T$ indicates the second measurement period. In the example of Fig. 4, the second measurement period is composed of five successive first measurement periods. In other words, $\Delta T = \sum \Delta t_i (i = 1$ to 5). $\Delta Q$ indicates the change in the fuel flow rate in the second measurement period. In the example of Fig. 4, $\Delta Q = \sum \Delta q_i (i = 1$ to 5). Therefore, the slope of the change in the fuel flow rate in the second measurement period is expressed as $\Delta Q/\Delta T$.

The determination as to the fuel instrument is performed based on, for example, whether or not all of the slopes $\Delta q_i/\Delta t_i$ (i = 1 to 5) of the changes in the fuel flow rates in the first measurement periods are equal to or greater than $m_1$ and equal to or less than $m_2$, and whether or not the slope $\Delta Q/\Delta T$ of the change in the fuel flow rate in the second measurement period is equal to or greater than $M_1$ and equal to or less than $M_2$,

For example, as exemplarily shown in Fig. 4, when $m_1, m_2, M_1$, and $M_2$ are positive values, all of the slopes $\Delta q_i/\Delta t_i$ are equal to or greater than $m_1$ and equal to or less than $m_2$, and $\Delta Q/\Delta T$ is equal to or greater than $M_1$ and equal to or less than $M_2$, it can be seen that the flow rate increases gradually with a constant slope. From this, it can be determined that the fuel cell system is in operation.

In the same manner, for example, when $m_1, m_2, M_1$, and $M_2$ are negative values, all of the slopes $\Delta q_i/\Delta t_i$ are equal to or greater than $m_1$ and equal to or less than $m_2$, and $\Delta Q/\Delta T$ is equal to or greater than $M_1$ and equal to or less than $M_2$, it can be seen that the flow rate decreases gradually with a constant slope. From this, it can be determined that the fuel cell system is in operation.

It should be noted that signs of $m_1, m_2, M_1$, and $M_2$ may not necessarily be the same. Although in the above description, ranges to be satisfied by the slopes contain $m_1, m_2, M_1$, and $M_2$ which are thresholds, these ranges may not contain the thresholds.

In accordance with the method as described above, it becomes possible to accurately determine the fuel instrument which causes a rapid change in the fuel flow rate and the fuel cell system which causes a gradual change in the fuel flow rate such that the fuel instrument and the fuel cell system are distinguished from each other.

The condition of the slope of the change in the fuel flow rate in the first measurement period may not necessarily be the same as the condition of the slope of the change in the fuel flow rate in the second measurement period. Especially, in a case where the first measurement period is as short as several seconds, a slope which is deviated considerably from its original gradual slope, may be sometimes obtained as the slope, due to an influence of a measurement error and the like of the flow rate. In this case, to avoid misdetermination, the condition of the slope of the change in the fuel flow rate in the first measurement period is preferably smaller than the condition of the slope of the change in the fuel flow rate in the second measurement period. Specifically, when the first range is defined as the range in which the slope is equal to or greater than $m_1$ and equal to or less than $m_2$, and the second range is defined as the range in which the slope is equal to or greater than $M_1$ and equal to or less than $M_2$, the first range preferably includes the second range. Specifically, for example, when the condition of the slope of the change in the fuel flow rate in the first measurement period is equal to or greater than $m_1$ and equal to or less than $m_2$, and the condition of the slope of the change in the fuel flow rate in the second measurement period is equal to or greater than $M_1$ and equal to or less than $M_2$, $m_1 \leqq M_1 < M_2 \leqq m_2$ is preferably satisfied. Or, $M_1 \leqq m_1 < M_2 \leqq m_2$ may be satisfied. Or, $M_1 \leqq m_1 < m_2 \leqq M_2$ may be satisfied. Or, $m_1 \leqq M_1 < m_2 \leqq M_2$ may be satisfied.

In a case where there are a plurality of first measurement periods, the condition in which the slopes in all of the first measurement periods fall within an allowable range may not be used. For example, the condition in which the slope(s) of the first determination period(s) which is/are randomly selected fall(s) within the allowable range may be used. Or, the condition in which the slopes in all of the first determination periods with odd ordinal numbers fall within the allowable range may be used. The value of the slope may not be necessarily directly compared to the threshold. It may be determined whether or not the slope of the change in the fuel flow rate in the first measurement period satisfies a predetermined condition using an indicator indicating a degree to which the value of the slope is varied among the plurality of first measurement periods, such as a variance, a standard deviation, or a value obtained by dividing the variance or the standard deviation by the corresponding mean value. A specific determination method is not limited so long as the determination is performed using the slope of the change in the fuel flow rate in the first measurement period.

In a case where there are a plurality of second measurement periods, the condition in which the slopes in all of the second measurement periods fall within an allowable range may not be used. For example, the condition in which the slope(s) of the second determination period(s) which is/are randomly selected fall(s) within the allowable range may be used. Or, the condition in which the slopes in all of the second determination periods with odd ordinal numbers fall within the allowable range may be used. The value of the slope may not be necessarily directly compared to the threshold. It may be determined whether or not the slope of the change in the fuel flow rate in the second measurement period satisfies a predetermined condition using an indicator indicating a degree to which the value of the slope is varied among the plurality of second measurement periods, such as a variance, a standard deviation, or a value obtained by dividing the variance or the standard deviation by the corresponding mean value. A specific determination method is not limited so long as the determination is performed using the slope of the change in the fuel flow rate in the second measurement period.

The condition of the slope of the change in the fuel flow rate in the first measurement period may be different qualitatively from the condition of the slope of the change in the fuel flow rate in the second measurement period. Specifically, for example, regarding the slope of the change in the fuel flow rate in the first measurement period, the condition may be whether or not the value derived by dividing the standard deviation by the mean value is equal to or less than a predetermined threshold. Regarding the slope of the change in the fuel flow rate in the second measurement period, the condition may be whether or not the slope falls within the second range. Regarding the slope of the change in the fuel flow rate in the first measurement period, the condition may be whether or not the slope falls within the first range, while regarding the slope of the change in the fuel flow rate in the second measurement period, another condition may be used, instead of whether or not the slope falls within the second range.

**(Embodiment 2)**

**[Device configuration]**

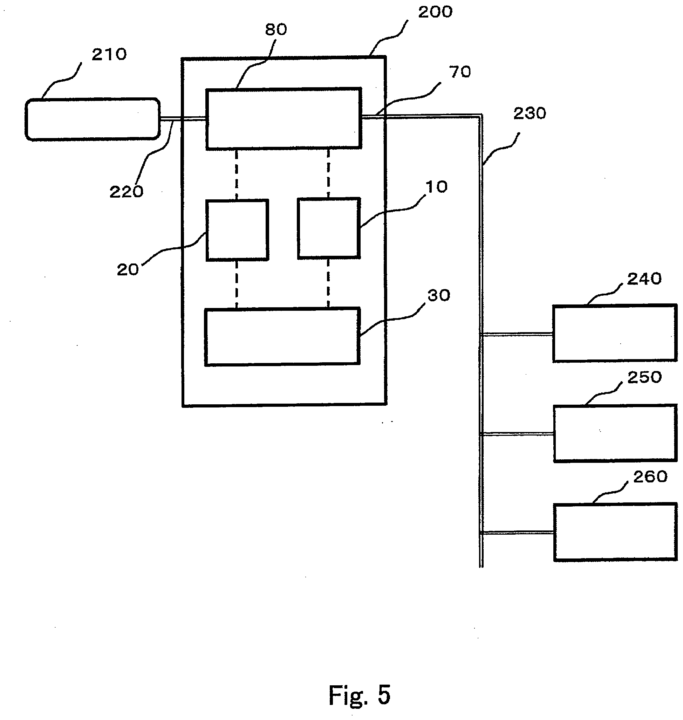

Fig. 5 is a conceptual view showing an exemplary schematic configuration of a fuel instrument determination device according to Embodiment 2.

As shown in Fig. 5, a fuel instrument determination device 200 according to Embodiment 2 includes the first obtaining section 10, the second obtaining section 20, the determiner section 30, a fluid passage 70, and a flow rate measurement section 80. Although in the example of Fig. 5, the first obtaining section 10 and the second obtaining section 20 are communicatively coupled to the determiner section 30 and the flow rate measurement section 80, a connection relationship is not limited to this.

The flow rate measurement section 80 measures a flow rate of a fuel flowing through the fluid passage 70. As the flow rate measurement section 80, for example, an ultrasonic flow meter, a flow meter of a flow sensor type, etc., may be used. In a case where the hardware configuration of Fig. 2 is employed, the flow rate measurement section 80 may be a flow sensor which may be connected to the input/output unit 60.

The fluid passage 70 is connected to a gas supply source 210 via an upstream gas pipe 220. The gas supply source 210 may be, for example, a gas supply pipe of a gas utility company. The fluid passage 70 is connected to gas instruments such as a fuel cell system 240, a fan heater 250 and a hot plate 260, via a downstream gas pipe 230.

In the present embodiment, the first obtaining section 10 obtains the slope of the change in the fuel flow rate in the first measurement period based on the fuel flow rate measured by the flow rate measurement section 80. The second obtaining section 20 obtains the slope of the change in the fuel flow rate in the second measurement period which is different in length from the first measurement section, based on the fuel flow rate measured by the flow rate measurement section 80.

In the present embodiment, the constituents of the device, which are other than the above, may be the same as those of Embodiment 1. Therefore, the same constituents are designated by the same reference symbols and names, and will not be described in detail repetitively.

Although Fig. 5 exemplarily shows a case where the fuel is the gas, the fuel may be a liquid fuel such as kerosene.

**[Fuel instrument determination method]**

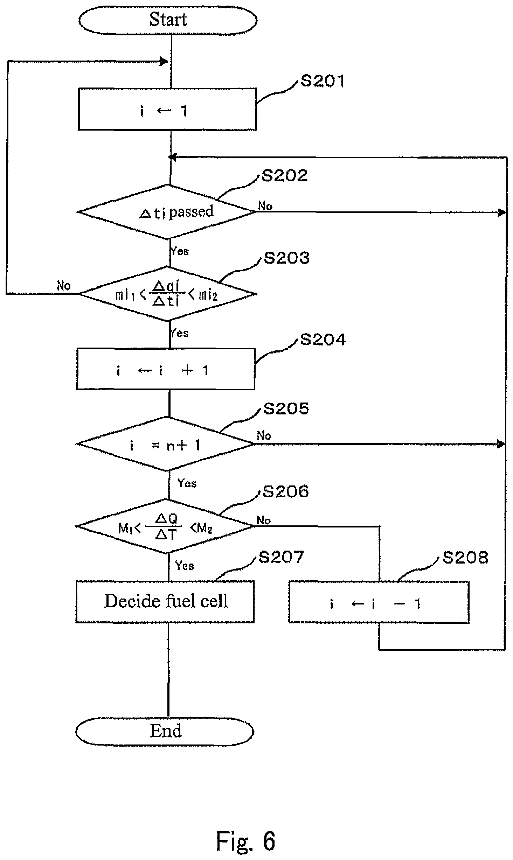

Fig. 6 is a flowchart showing an exemplary fuel instrument determination method according to Embodiment 2. Hereinafter, with reference to Fig. 6, the operation method of the fuel instrument determination device 200 according to Embodiment 2 and the fuel instrument determination method according to Embodiment 2 will be described. It is supposed that in the operation of the fuel instrument determination device 200, for example, each operation may be executed under control of the controller 40 based on an operation program stored in the storage unit 50. Although a case where the example of Fig. 4 is used will be exemplarily described, the present embodiment is not limited to this configuration, as a matter of course.

When the fuel instrument determination operation starts (Start), initially, 1 is stored in a variable i (step S201). At a time point when $\Delta t_i$ has passed (Yes in step S202), the slope $\Delta q_i/\Delta t_i$ in the change in the fuel flow rate in the i-th first measurement period is calculated. It is determined whether or not $m_{i1} < (\Delta q_i/\Delta t_i) < m_{i2}$ is satisfied (step S203). $m_{i1}$ indicates a lower limit of the slope of the change in the fuel flow rate in the i-th first measurement period. $m_{i2}$ indicates an upper limit of the slope of the change in the fuel flow rate in the i-th first measurement period. When a result of the determination in step S203 is No, the process returns to step S201.

When a result of the determination in step S203 is Yes, a value which is a sum of 1 and the variable i is stored in the variable i (step S204). It is determined whether or not i = n + 1 is satisfied (step S205). n indicates the number of first measurement periods included in the second measurement period. When a result of the determination in step S205 is No, the process returns to step S202.

When a result of the determination in step S205 is Yes, the slope $\Delta Q/\Delta T$ of the change in the fuel flow rate in the second measurement period is calculated. It is determined whether or not $M_1 < (\Delta Q/\Delta T) < M_2$ is satisfied (step S206).

When a result of the determination in step S206 is Yes, it is determined that the fuel cell system is in use (step S207), and the fuel instrument determination operation is terminated (End).

When a result of the determination in step S206 is No, a value obtained by subtracting 1 from the variable i is stored in the variable i (step S208), and the process returns to step S202.

The above described operation and method are merely exemplary. In the present embodiment, the operation method, the calculation method, etc., may be the same as those of Embodiment 1.

[Modified example]

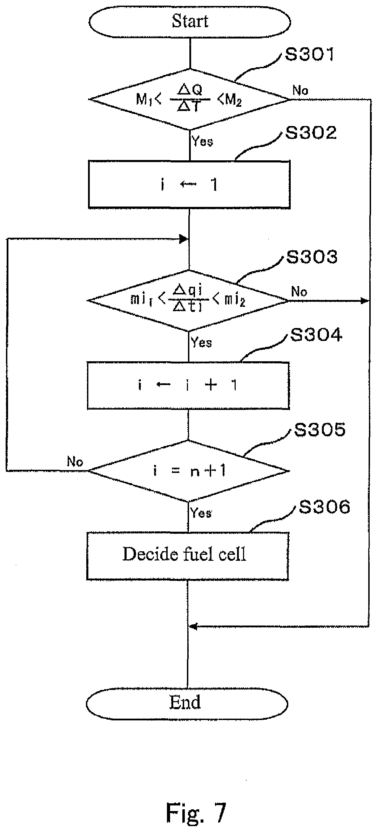

Fig. 7 is a flowchart showing an exemplary fuel instrument determination method according to a modified example of Embodiment 2. Hereinafter, with reference to Fig. 7, a description will be given of the operation method of the fuel instrument determination device according to the modified example of Embodiment 2 and the fuel instrument determination method according to the modified example of Embodiment 2. Since the fuel instrument determination device according to the modified example of Embodiment 2 may be identical in configuration to that of Embodiment 2, this will not be described in detail in repetition. It is supposed that in the operation of the fuel instrument determination device, for example, each operation may be executed under control of the controller 40 based on the operation program stored in the storage unit 50. Although a case where the example of Fig. 4 is used will be exemplarily described, the present modified example is not limited to this configuration, as a matter of course.

When the fuel instrument determination operation starts (Start), initially, the slopes $\Delta q_i/\Delta t_i$ of the changes in the fuel flow rates in the plurality of first measurement periods, and the slope $\Delta Q/\Delta T$ of the change in the fuel flow rate in the second measurement period are obtained. It is determined whether or not $M_1 < (\Delta Q/\Delta T) < M_2$ is satisfied (step S301). That is, at a time point when step S301 is performed, the second measurement period has already passed. When a result of the determination in step S301 is No, the fuel instrument determination operation is terminated (End).

Then, 1 is stored in the variable i (step S302), and it is determined whether or not $m_{i1} < (\Delta q_i/\Delta t_i) < m_{i2}$ is satisfied (step S303). When a result of the determination in step S303 is No, the fuel instrument determination operation is terminated (End).

When a result of the determination in step S303 is Yes, a value which is a sum of 1 and the variable i is stored in the variable i (step S304). It is determined whether or not i = n + 1 is satisfied (step S305). n indicates the number of first measurement periods included in the second measurement period. When a result of the determination in step S305 is No, the process returns to step S303.

When a result of the determination in step S305 is Yes, it is determined that the fuel cell system is in use (step S306), and the fuel instrument determination operation is terminated (End).

The above described operation and method are merely exemplary. In the present embodiment, the operation method, the calculation method, etc., may be the same as those of Embodiment 1.

**(Embodiment 3)**

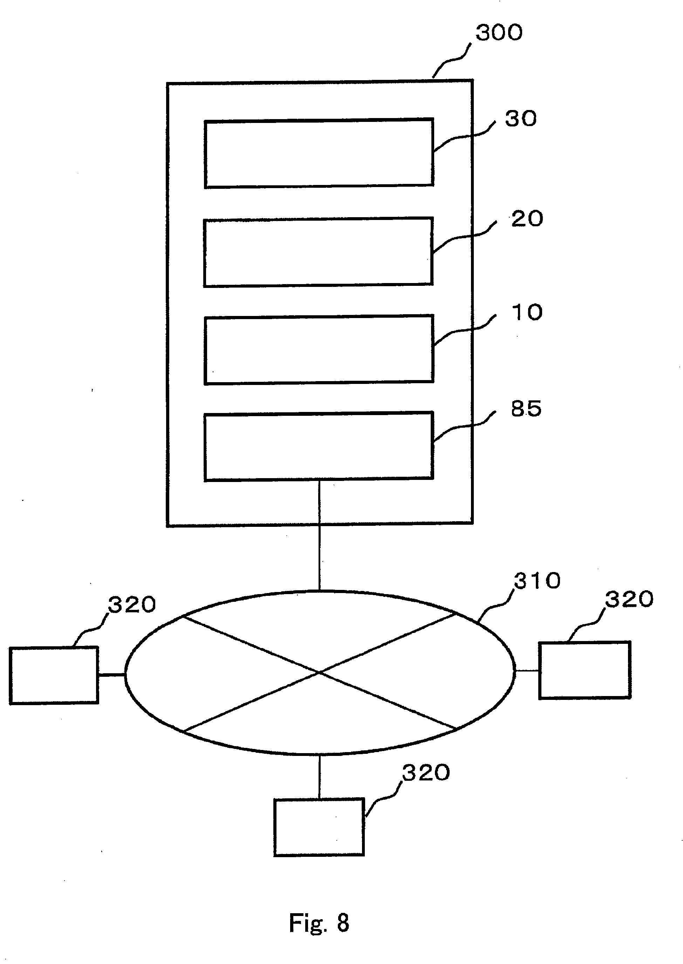

Fig. 8 is a conceptual view showing an exemplary schematic configuration of a fuel instrument determination device according to Embodiment 3.

As shown in Fig. 8, a fuel instrument determination device 300 according to Embodiment 3 includes the first obtaining section 10, the second obtaining section 20, the determiner section 30, and a flow rate obtaining section 85.

The flow rate obtaining section 85 obtains a gas flow rate from each of gas meters 320 via a network 310. In a case where the hardware configuration of Fig. 2 is used, the flow rate obtaining section 85 may be constituted by a communication board, etc., which may be connected to the input/output unit 60.

The network 310 may be a computer line such as LAN or internet, an analog phone line, an ISDN line, etc..

The gas meters 320 are gas meters installed at home, commercial stores (shops), etc., and are connected to the network 310. Each of the gas meters 320 sends a gas usage amount, i.e., gas flow rate of the gas used in the corresponding place, to the fuel instrument determination device 300 via the network 310.

The first obtaining section 10 is capable of obtaining a slope of a change in the gas fuel flow rate in the gas meter 320 in the first measurement period, based on the gas flow rate obtained by the flow rate obtaining section 85.

The second obtaining section 20 is capable of obtaining a slope of a change in the gas fuel flow rate in the gas meter 320 in the second measurement period, based on the gas flow rate obtained by the flow rate obtaining section 85.

In the present embodiment, the constituents of the device which are other than the above stated constituents may be the same as those of Embodiment 1. Therefore, in the present embodiment, the same constituents as those of Embodiment 1 are designated by the same reference symbols and names, and will not be described in detail. In addition, a specific determination method of the present embodiment may be the same as those of Embodiment 1 and Embodiment 2, and will not be described in detail in repetition.

It should be noted that the flow rate obtaining section 85 is not essential. The first obtaining section 10 may obtain from each of the gas meters 320 the slope of the change in the gas fuel flow rate in the gas meter 320 in the first measurement period, via the network 310. The second obtaining section 20 may obtain the slope of the change in the gas fuel flow rate in the gas meter 320 in the second measurement period, using the slope of the change in the gas fuel flow rate in the gas meter in the first measurement period, which is obtained by the first obtaining section 10.

In a further alternative, the first obtaining section 10 may obtain from each of the gas meters 320 the slope of the change in the gas fuel flow rate in the gas meter 320 in the first measurement period, via the network 310, and the second obtaining section 20 may obtain from each of the gas meters 320 the slope of the change in the gas fuel flow rate in the gas meter 320 in the second measurement period, via the network 310.

Numeral improvements and alternative embodiments of the present invention will be conceived by those skilled in the art in view of the foregoing description. Accordingly, the description is to be construed as illustrative only, and is provided for the purpose of teaching those skilled in the art the best mode of carrying out the invention.

**Industrial Applicability**

A fuel instrument determination device and a fuel instrument determination method of the present invention are useful as a fuel instrument determination device and a fuel instrument determination method, which can improve an accuracy of instrument determination.

**Reference Signs List**

| | |
|---|---|
| 10 | first obtaining section |
| 20 | second obtaining section |
| 30 | determiner section |
| 40 | controller |
| 50 | storage unit |
| 55 | timer |
| 60 | input/output unit |
| 70 | fluid passage |
| 80 | flow rate measurement section |
| 85 | flow rate obtaining section |
| 100 | fuel instrument determination device |
| 200 | fuel instrument determination device |
| 210 | gas supply source |
| 220 | upstream gas pipe |
| 230 | downstream gas pipe |
| 240 | fuel cell system |
| 250 | fan heater |
| 260 | hot plate |
| 300 | fuel instrument determination device |
| 310 | network |
| 320 | gas meter |

**Claims**

1. A fuel instrument determination device comprising:

a first obtaining section (10) configured to obtain a slope of a change in a fuel flow rate in a first measurement period, the slope being obtained by dividing the change in the fuel flow rate in the first measurement period by time of the first measurement period;
a second obtaining section (20) configured to obtain a slope of a change in the fuel flow rate in a second measurement period which is different in length from the first measurement period; and a determiner section (30) configured to determine a fuel instrument, using the slope of the change in the fuel flow rate in the first measurement period and the slope of the change in the fuel flow rate in the second measurement period, wherein the second measurement period includes a plurality of first measurement periods, wherein the determiner section (30) is configured to determine the fuel instrument, depending on whether or not each of slopes of changes in fuel flow rates in all of the plurality of first measurement periods falls within a first range, and whether or not the slope of the change in the fuel flow rate in the second measurement period falls within a second range, wherein the first range is a range of the slope of the change in the fuel flow rate in which the slope of the change in the fuel flow rate is equal to or greater than a threshold $m_1$ and equal to or less than a threshold $m_2$,

wherein the second range is a range of the slope of the change in the fuel flow rate in which the slope of the change in the fuel flow rate is equal to or greater than a threshold $M_1$ and equal to or less than a threshold $M_2$,

**characterized in that**

the slope of change in the fuel flow rate in the second measurement period is obtained by dividing the change in the fuel flow rate in the second measurement period by the time of the second measurement period, and the thresholds are related as $m_1 \leqq M_1 < M_2 \leqq m_2$.

2. The fuel instrument determination device according to claim 1,
wherein the second measurement period is composed of the plurality of first measurement periods which are successive.

3. The fuel instrument determination device according to claim 2,
wherein the second obtaining section (20) is configured to perform calculation to obtain the slope of the change in the fuel flow rate in the second measurement period, using the slope of the change in the fuel flow rate in the first measurement period, which is obtained by the first obtaining section (10).

4. The fuel instrument determination device according to any one of claims 1 to 3,
wherein the first measurement periods are equal in length to each other.

5. The fuel instrument determination device according to claim 1, comprising:

a flow rate obtaining section (85) for obtaining a gas flow rate from a gas meter via a network;
wherein the first obtaining section (10) is configured to obtain a slope of a change in a gas fuel flow rate in the gas meter in the first measurement period; and
wherein the second obtaining section (20) is configured to obtain a slope of a change in the gas fuel flow rate in the gas meter in the second measurement period.

6. The fuel instrument determination device according to claim 1,
wherein the first obtaining section (10) is configured to obtain from a gas meter a slope of a change in a gas fuel flow rate in the gas meter in the first measurement period via a network; and
wherein the second obtaining section (20) is configured to perform calculation to obtain a slope of a change in the gas fuel flow rate in the gas meter in the second measurement period, using the slope of the change in the gas fuel flow rate in the gas meter in the first measurement period, which is obtained by the first obtaining section.

7. The fuel instrument determination device according to claim 1,
wherein the first obtaining section (10) is configured to obtain from a gas meter a slope of a change in a gas fuel flow rate in the gas meter in the first measurement period via a network (310); and
wherein the second obtaining section (20) is configured to obtain from the gas meter a slope of a change in the gas fuel flow rate in the gas meter in the second measurement period via the network (310).

8. A flow meter device comprising:

a fluid passage (70);
a flow rate measurement section (80) for measuring a fuel flow rate of a fuel flowing through the fluid passage; and
the fuel instrument determination device according to claim 1,
wherein the determiner section (30) of the fuel instrument determination device is configured to determine the fuel instrument connected to the fluid passage, using the slope of the change in the fuel flow rate in the first measurement period and the slope of the change in the fuel flow rate in the second measurement period.

9. A gas meter comprising:

a fluid passage (70);
a flow rate measurement section (80) for measuring a flow rate of a gas flowing through the fluid passage (70); and
the fuel instrument determination device according to claim 1,
wherein the determiner section (30) of the fuel instrument determination device is configured to determine the fuel instrument connected to the fluid passage (70), using the slope of the change in the fuel flow rate in the first measurement period and the slope of the change in the fuel flow rate in the second measurement period.

10. A fuel instrument determination method, comprising:

obtaining a slope of a change in a fuel flow rate in a first measurement period, the slope being obtained by dividing the change in the fuel flow rate in the first measurement period by time of the first measurement period;
obtaining a slope of a change in the fuel flow rate in a second measurement period which is different in length from the first measurement period, and

determining a fuel instrument, using the slope of the change in the fuel flow rate in the first measurement period and the slope of the change in the fuel flow rate in the second measurement period,

wherein the second measurement period includes a plurality of first measurement periods, wherein in the determination, the fuel instrument is determined depending on whether or not each of slopes of changes in fuel flow rates in all of the plurality of first measurement periods falls within a first range, and whether or not the slope of the change in the fuel flow rate in the second measurement period falls within a second range, wherein the first range is a range of the slope of the change in the fuel flow rate in which the slope of the change in the fuel flow rate is equal to or greater than a threshold $m_1$ and equal to or less than a threshold $m_2$,

wherein the second range is a range of the slope of the change in the fuel flow rate in which the slope of the change in the fuel flow rate is equal to or greater than a threshold $M_1$ and equal to or less than a threshold $M_2$,

**characterized in that**

the slope of change in the fuel flow rate in the second measurement period is obtained by dividing the change in the fuel flow rate in the second measurement period by the time of the second measurement period, and the thresholds are related as $m_1 \leqq M_1 < M_2 \leqq m_2$.

11. The fuel instrument determination method, according to claim 10,
wherein the second measurement period is composed of the plurality of first measurement periods which are successive.

12. The fuel instrument determination method, according to claim 10 or 11,
wherein the first measurement periods are equal in length to each other.

**Patentansprüche**

1. Kraftstoffinstrumentenbestimmungsvorrichtung, die Folgendes umfasst:

einen ersten Erhalteabschnitt (10), der konfiguriert ist, eine Steigung einer Änderung einer Kraftstoffdurchflussmenge in einer ersten Messperiode zu erhalten, wobei die Steigung durch Dividieren der Änderung der Kraftstoffdurchflussmenge in der ersten Messperiode durch die Dauer der ersten Messperiode erhalten wird;

einen zweiten Erhalteabschnitt (20), der konfiguriert ist, eine Steigung einer Änderung der Kraftstoffdurchflussmenge in einer zweiten Messperiode, die sich in der Länge von der ersten Messperiode unterscheidet, zu erhalten; und

einen Bestimmungsabschnitt (30), der konfiguriert ist, ein Kraftstoffinstruments unter Verwendung der Steigung der Änderung der Kraftstoffdurchflussmenge in der ersten Messperiode und der Steigung der Änderung der Kraftstoffdurchflussmenge in der zweiten Messperiode zu bestimmen,

wobei die zweite Messperiode mehrere erste Messperioden umfasst,

wobei der Bestimmungsabschnitt (30) konfiguriert ist, das Kraftstoffinstrument in Abhängigkeit davon zu bestimmen, ob jede der Steigungen von Änderungen von Kraftstoffdurchflussmengen in allen der mehreren ersten Messperioden in einen ersten Bereich fällt und ob die Steigung der Änderung der Kraftstoffdurchflussmenge in der zweiten Messperiode in einen zweiten Bereich fällt,

wobei der erste Bereich ein Bereich der Steigung der Änderung der Kraftstoffdurchflussmenge ist, in dem die Steigung der Änderung der Kraftstoffdurchflussmenge gleich oder größer einem Schwellenwert $m_1$ und gleich oder kleiner einem Schwellenwert $m_2$ ist,

wobei der zweite Bereich ein Bereich der Steigung der Änderung der Kraftstoffdurchflussmenge ist, in dem die Steigung der Änderung der Kraftstoffdurchflussmenge gleich oder größer einem Schwellenwert $M_1$ und gleich oder kleiner einem Schwellenwert $M_2$ ist,

**dadurch gekennzeichnet, dass** die Steigung einer Änderung der Kraftstoffdurchflussmenge in der zweiten Messperiode durch Dividieren der Änderung der Kraftstoffdurchflussmenge in der zweiten Messperiode durch die Dauer der zweiten Messperiode erhalten wird, und die Schwellenwerte gemäß $m_1 \leq M_1 < M_2 \leq m_2$ zusammenhängen.

2. Kraftstoffinstrumentenbestimmungsvorrichtung nach Anspruch 1,
wobei die zweite Messperiode aus den mehren ersten Messperioden, die aufeinanderfolgen, besteht.

3. Kraftstoffinstrumentenbestimmungsvorrichtung nach Anspruch 2,
wobei der zweite Erhalteabschnitt (20) konfiguriert ist, eine Berechnung auszuführen, um die Steigung der Änderung der Kraftstoffdurchflussmenge in der zweiten Messperiode unter Verwendung der Steigung der Änderung der Kraftstoffdurchflussmenge in der ersten Messperiode, die von dem ersten Erhalteabschnitt (10) erhalten wird, zu erhalten.

4. Kraftstoffinstrumentenbestimmungsvorrichtung nach einem der Ansprüche 1 bis 3, wobei die ersten Messperioden gleich lang sind.

5. Kraftstoffinstrumentenbestimmungsvorrichtung nach Anspruch 1, die Folgendes umfasst:

einen Durchflussmengen-Erhalteabschnitt (85) zum Erhalten einer Gasdurchflussmenge von einem Gaszähler über ein Netz; wobei der erste Erhalteabschnitt (10) konfiguriert ist, eine Steigung einer Änderung einer Gaskraftstoffdurchflussmenge in dem Gaszähler in der ersten Messperiode zu erhalten; und wobei der zweite Erhalteabschnitt (20) konfiguriert ist, eine Steigung einer Änderung der Gaskraftstoffdurchflussmenge in dem Gaszähler in der zweiten Messperiode zu erhalten.

6. Kraftstoffinstrumentenbestimmungsvorrichtung nach Anspruch 1, wobei der erste Erhalteabschnitt (10) konfiguriert ist, von einem Gaszähler eine Steigung einer Änderung einer Gaskraftstoffdurchflussmenge in dem Gaszähler in der ersten Messperiode über ein Netz zu erhalten; und wobei der zweite Erhalteabschnitt (20) konfiguriert ist, unter Verwendung der Steigung der Änderung der Gaskraftstoffdurchflussmenge in dem Gaszähler in der ersten Messperiode, die durch den ersten Erhalteabschnitt erhalten wird, eine Berechnung durchzuführen, um eine Steigung einer Änderung der Gaskraftstoffdurchflussmenge in dem Gaszähler in der zweiten Messperiode zu erhalten.

7. Kraftstoffinstrumentenbestimmungsvorrichtung nach Anspruch 1, wobei der erste Erhalteabschnitt (10) konfiguriert ist, von einem Gaszähler eine Steigung einer Änderung einer Gaskraftstoffdurchflussmenge in dem Gaszähler in der ersten Messperiode über ein Netz (310) zu erhalten; und wobei der zweite Erhalteabschnitt (20) konfiguriert ist, von dem Gaszähler eine Steigung einer Änderung der Gaskraftstoffdurchflussmenge in dem Gaszähler in der zweiten Messperiode über das Netz (310) zu erhalten.

8. Durchflussmessvorrichtung, die Folgendes umfasst:

einen Fluiddurchgang (70); einen Durchflussmengenmessabschnitt (80) zum Messen einer Kraftstoffdurchflussmenge eines durch den Fluiddurchgang fließenden Kraftstoffs; und die Kraftstoffinstrumentenbestimmungsvorrichtung nach Anspruch 1, wobei der Bestimmungsabschnitt (30) der Kraftstoffinstrumentenbestimmungsvorrichtung konfiguriert ist, das mit dem Fluiddurchgang verbundene Kraftstoffinstrument unter Verwendung der Steigung der Änderung der Kraftstoffdurchflussmenge in der ersten Messperiode und der Steigung der Änderung der Kraftstoffdurchflussmenge in der zweiten Messperiode zu bestimmen.

9. Gaszähler, der Folgendes umfasst:

einen Fluiddurchlass (70); einen Durchflussmengenmessabschnitt (80) zum Messen einer Kraftstoffdurchflussmenge eines durch den Fluiddurchgang fließenden Kraftstoffs; und die Kraftstoffinstrumentenbestimmungsvorrichtung nach Anspruch 1, wobei der Bestimmungsabschnitt (30) der Kraftstoffinstrumentenbestimmungsvorrichtung konfiguriert ist, das mit dem Fluiddurchgang (70) verbundene Kraftstoffinstrument unter Verwendung der Steigung der Änderung der Kraftstoffdurchflussmenge in der ersten Messperiode und der Steigung der Änderung der Kraftstoffdurchflussmenge in der zweiten Messperiode zu bestimmen.

10. Kraftstoffinstrumentenbestimmungsverfahren, das Folgendes umfasst:

Erhalten einer Steigung einer Änderung einer Kraftstoffdurchflussmenge in einer ersten Messperiode, wobei die Steigung durch Dividieren der Änderung der Kraftstoffdurchflussmenge in der ersten Messperiode durch die Dauer der ersten Messperiode erhalten wird; Erhalten einer Steigung einer Änderung der Kraftstoffdurchflussmenge in einer zweiten Messperiode, die sich in der Länge von der ersten Messperiode unterscheidet, und Bestimmen eines Kraftstoffinstruments unter Verwendung der Steigung der Änderung der Kraftstoffdurchflussmenge in der ersten Messperiode und der Steigung der Änderung der Kraftstoffdurchflussmenge in der zweiten Messperiode, wobei die zweite Messperiode mehrere der ersten Messperioden umfasst, wobei in der Bestimmung das Kraftstoffinstrument in Abhängigkeit davon bestimmt wird, ob jede von Steigungen von Änderungen von Kraftstoffdurchflussmengen in allen der mehreren ersten Messperioden in einen ersten Bereich fällt und ob die Steigung der Änderung der Kraftstoffdurchflussmenge in der zweiten Messperiode in einen zweiten Bereich fällt,
wobei der erste Bereich ein Bereich der Steigung der Änderung der Kraftstoffdurchflussmenge ist, in dem die Steigung der Änderung der Kraftstoffdurchflussmenge gleich oder größer einem Schwellenwert $m_1$ und gleich oder kleiner einem Schwellenwert $m_2$ ist,
wobei der zweite Bereich ein Bereich der Steigung der Änderung der Kraftstoffdurchflussmenge ist, in dem die Steigung der Änderung der Kraftstoffdurchflussmenge gleich oder größer einem Schwellenwert $M_1$ und gleich oder kleiner einem Schwellenwert $M_2$ ist, **dadurch gekennzeichnet, dass** die Steigung einer Änderung der Kraftstoffdurchflussmenge in der zweiten Messperiode durch Dividieren der Änderung der Kraftstoffdurchflussmenge in der zweiten Messperiode durch die Dauer der zweiten Messperiode erhalten wird, und die Schwellenwerte gemäß $m_1 \le M_1 < M_2 \le m_2$ zusammenhängen.

11. Kraftstoffinstrumentenbestimmungsverfahren nach Anspruch 10,
wobei die zweite Messperiode aus den mehreren ersten Messperioden, die aufeinanderfolgen, besteht.

12. Kraftstoffinstrumentenbestimmungsverfahren nach Anspruch 10 oder 11,
wobei die ersten Messperioden gleich lang sind.


**Revendications**

1. Dispositif de détermination d'instrument de consommation de carburant comprenant :

une première section d'obtention (10) configurée pour obtenir une pente de changement d'un débit de carburant pendant une première période de mesure, la pente étant obtenue par division du changement de débit de carburant pendant la première période de mesure par la durée de la première période de mesure ;
une seconde section d'obtention (20) configurée pour obtenir une pente de changement d'un débit de carburant pendant une seconde période de mesure de longueur différente de celle de la première période de mesure ; et
une section de détermination (30) configurée pour déterminer un instrument de consommation de carburant en utilisant la pente du changement de débit de carburant pendant la première période de mesure et la pente du changement de débit de carburant pendant la seconde période de mesure,
où la seconde période de mesure comporte une pluralité de premières périodes de mesure,
où la section de détermination (30) est configurée pour déterminer l'instrument de consommation de carburant en fonction de si chaque pente de changement de débit de carburant pendant toutes les périodes de mesure de la pluralité de premières périodes de mesure est comprise dans une première plage ou non, et si la pente de changement du débit de carburant pendant la seconde période de mesure est comprise dans une seconde plage ou non,
où la première plage est une plage de pentes de changement de débit de carburant dans laquelle la pente de changement de débit de carburant est égale ou supérieure à un seuil $m_1$ et égale ou inférieure à un seuil $m_2$,
où la seconde plage est une plage de la pente de changement de débit de carburant dans laquelle la pente de changement de débit de carburant est égale ou supérieure à un seuil $M_1$ et égale ou inférieure à un seuil $M_2$,
**caractérisé en ce que**
la pente de changement de débit de carburant pendant la seconde période de mesure est obtenue en divisant le changement de débit de carburant pendant la seconde période de mesure par la durée de la seconde période de mesure, et le rapport entre les seuils est

$$m_1 \le M_1 < M_2 \le m_2.$$

2. Dispositif de détermination d'instrument de consommation de carburant selon la revendication 1,
où la seconde période de mesure est composée de la pluralité de premières périodes de mesure qui sont consécutives.

3. Dispositif de détermination d'instrument de consommation de carburant selon la revendication 2,
où la seconde section d'obtention (20) est configurée pour effectuer un calcul pour obtenir la pente de changement du débit de carburant pendant la seconde période de mesure en utilisant la pente de changement du débit de carburant pendant la première période de mesure obtenue par la première section d'obtention (10).

4. Dispositif de détermination d'instrument de consommation de carburant selon l'une quelconque des revendications 1 à 3,
où les premières périodes de mesure ont des durées égales les unes aux autres.

5. Dispositif de détermination d'instrument de consommation de carburant selon la revendication 1,
comprenant :

une section d'obtention de débit (85) pour obtenir un débit de gaz à partir d'un compteur de gaz via un réseau ;

où la première section d'obtention (10) est configurée pour obtenir une pente d'un changement d'un débit de carburant gazeux dans le compteur de gaz pendant la première période de mesure ; et

où la seconde section d'obtention (20) est configurée pour obtenir une pente d'un changement d'un débit de carburant gazeux dans le compteur de gaz pendant la seconde période de mesure.

6. Dispositif de détermination d'instrument de consommation de carburant selon la revendication 1, où la première section d'obtention (10) est configurée pour obtenir auprès d'un compteur de gaz une pente d'un changement d'un débit de carburant gazeux dans le compteur de gaz pendant la première période de mesure via un réseau ; et où la seconde section d'obtention (20) est configurée pour effectuer un calcul pour obtenir la pente d'un changement du débit de carburant gazeux dans le compteur de gaz pendant la seconde période de mesure en utilisant la pente du changement du débit de carburant gazeux pendant la première période de mesure obtenue par la première section d'obtention.

7. Dispositif de détermination d'instrument de consommation de carburant selon la revendication 1, où la première section d'obtention (10) est configurée pour obtenir auprès d'un compteur de gaz une pente d'un changement d'un débit de carburant gazeux dans le compteur de gaz pendant la première période de mesure via un réseau (310) ; et où la seconde section d'obtention (20) est configurée pour obtenir auprès du compteur de gaz une pente d'un changement d'un débit de carburant gazeux dans le compteur de gaz pendant la seconde période de mesure via le réseau (310).

8. Dispositif compteur de gaz comprenant :

un passage de fluide (70) ;
une section de mesure de débit (80) pour mesurer un débit de carburant d'un carburant circulant dans le passage de fluide ; et
le dispositif de détermination d'instrument de consommation de carburant selon la revendication 1,
où la section de détermination (30) du dispositif de détermination d'instrument de consommation de carburant est configurée pour déterminer l'instrument de consommation de carburant connecté au passage de fluide en utilisant la pente du changement du débit de carburant pendant la première période de mesure et la pente du changement du débit de carburant pendant la seconde période de mesure.

9. Compteur de gaz comprenant :

un passage de fluide (70) ;
une section de mesure de débit (80) pour mesurer un débit d'un gaz circulant dans le passage de fluide (70) ; et
le dispositif de détermination d'instrument de consommation de carburant selon la revendication 1,
où la section de détermination (30) du dispositif de détermination d'instrument de consommation de carburant est configurée pour déterminer l'instrument de consommation de carburant connecté au passage de fluide (70) en utilisant la pente du changement du débit de carburant pendant la première période de mesure et la pente du changement du débit de carburant pendant la seconde période de mesure.

10. Procédé de détermination d'instrument de consommation de carburant comprenant les étapes consistant à :

obtenir une pente d'un changement d'un débit de carburant pendant une première période de mesure, la pente étant obtenue par division du changement de débit de carburant pendant la première période de mesure par la durée de la première période de mesure ;
obtenir une pente de changement d'un débit de carburant pendant une seconde période de mesure de longueur différente de celle de la première période de mesure ; et
déterminer un instrument de consommation de carburant en utilisant la pente du changement de débit de carburant pendant la première période de mesure et la pente du changement de débit de carburant pendant la seconde période de mesure,
où la seconde période de mesure comporte une pluralité de premières périodes de mesure,
où lors de la détermination, l'instrument de consommation de carburant est déterminé en fonction de si chaque pente de changement de débit de carburant pendant toutes les périodes de mesure de la pluralité de premières périodes de mesure est comprise dans une première plage ou non, et si la pente de changement du débit de carburant pendant la seconde période de mesure est comprise dans une seconde plage ou non,
où la première plage est une plage de pentes de changement de débit de carburant dans laquelle la pente de changement de débit de carburant est égale ou supérieure à un seuil $m_1$ et

égale ou inférieure à un seuil $m_2$,
où la seconde plage est une plage de pentes de changement de débit de carburant dans laquelle la pente de changement de débit de carburant est égale ou supérieure à un seuil $M_1$ et égale ou inférieure à un seuil $M_2$,
**caractérisé en ce que**
la pente de changement de débit de carburant pendant la seconde période de mesure est obtenue en divisant le changement de débit de carburant pendant la seconde période de mesure par la durée de la seconde période de mesure, et le rapport entre les seuils est

$$m_1 \leq M_1 < M_2 \leq m_2.$$

11. Procédé de détermination d'instrument de consommation de carburant selon la revendication 10, où la seconde période de mesure est composée de la pluralité de premières périodes de mesure qui sont consécutives.

12. Procédé de détermination d'instrument de consommation de carburant selon la revendication 10 ou 11, où les premières périodes de mesure ont des durées égales les unes aux autres.

Fig. 1

Fig. 2

Fig. 3

Fig. 4

Fig. 5

Start

$i \leftarrow 1$ — S201

$\Delta ti\ passed$ — S202 — No

Yes

$mi_1 < \dfrac{\Delta qi}{\Delta ti} < mi_2$ — S203 — No

Yes

$i \leftarrow i + 1$ — S204

$i = n + 1$ — S205 — No

Yes

$M_1 < \dfrac{\Delta Q}{\Delta T} < M_2$ — S206 — No

Yes

Decide fuel cell — S207

$i \leftarrow i - 1$ — S208

End

Fig. 6

Fig. 7

Fig. 8

REFERENCES CITED IN THE DESCRIPTION

**Patent documents cited in the description**

- JP 2006313114 A
- EP 1881304 A1
- EP 2093545 A1